# EUROPÄISCHE PATENTANMELDUNG

(11) **EP 3 922 972 A2**
(43) Veröffentlichungstag der Anmeldung: **15.12.2021**
(21) Anmeldenummer: 21184502.9
(22) Anmeldetag: 08.06.2016
(51) Int. Cl.: G01L 11/04, G01L 11/06, G01L 19/00, G01L 27/00

(54) **VORRICHTUNG ZUR MESSUNG DES DRUCKS EINES DURCH EINE ROHRLEITUNG STRÖMENDEN FLUIDS**

(30) Priorität: 12.06.2015 DE 102015109450
(62) Teilanmeldung aus: 16730299.1
(71) Anmelder: ABB SCHWEIZ AG, 5400 Baden (CH)
(72) Erfinder: SZÁSZ, Paul, 68723 Plankstadt (DE); GASCH, Armin, 67346 Speyer (DE); ZUCCHI, Roberto, 22016 Lenno (IT)
(74) Vertreter: Maiwald Patent- und Rechtsanwaltsgesellschaft mbH

(57) **Zusammenfassung**

Vorrichtung (1) zur Messung des Drucks p eines durch eine Rohrleitung (2, 51) strömenden Fluids (3), umfassend mindestens einen an einem Außenumfang (2a, 51a) der Rohrleitung (2, 51) angeordneten primären Sensor (4) zur Messung einer vom Druck p abhängigen primären physikalischen Messgröße (100), wobei der Absolutwert des Drucks p durch Verrechnung dieser primären physikalischen Messgröße (100) mit mindestens einer Eichgröße (101) erhältlich ist und wobei diese Eichgröße (101) sich auf die Geometrie und/oder auf mindestens eine Materialeigenschaft der Rohrleitung (2, 51) bezieht, ferner umfassend Mittel (5) zur Ermittlung der Eichgröße (101) sowie eine Auswerteeinheit (6) zur Ermittlung des Drucks p aus der primären physikalischen Messgröße (100) in Verbindung mit der Eichgröße (101), wobei die Mittel (5) zur Ermittlung der Eichgröße (101)
• ein fluidisch mit der Rohrleitung (2) verbindbares Messrohr (51), das sich im Material und/oder in der Querschnittsgeometrie vom Rest der Rohrleitung (2) unterscheidet und für das die Eichgröße (101) bekannt ist, wobei der primäre Sensor (4) an einem Außenumfang (51a) des Messrohrs (51) angeordnet ist, und/oder
• mindestens einen an einem Außenumfang (2a, 51a) der Rohrleitung (2) oder des Messrohrs (51) angeordneten Eichsensor (52), der physikalisch auf die Eichgröße (101) sensitiv ist, umfassen.

## Beschreibung

Die Erfindung bezieht sich auf eine Vorrichtung, mit der in industriellen Anwendungen der Druck eines in einer Rohrleitung strömenden Fluids ohne direkten Kontakt zu diesem Fluid gemessen werden kann.

### Stand der Technik

In vielen industriellen Prozessen ist der Druck eines in einer Rohrleitung strömenden Fluids zu überwachen. Hierfür wird typischerweise ein Sensor durch die Wandung der Rohrleitung in das Fluid geführt. Derartige Durchbrüche durch die Wandung müssen gegen Leckagen abgedichtet sein. Dies macht die Drucküberwachung aufwendig.

Daher wird vielfach versucht, den Druck des Fluids nicht-invasiv, also ohne direkten Kontakt des Sensors zum Fluid, zu messen. So ist beispielsweise aus der US 7 093 496 A eine kompakte Messvorrichtung bekannt, die mit einer Klemmschelle an einen Außenumfang der Rohrleitung angelegt werden kann. Die zwischen der Rohrleitung und der Klemmschelle wirkende Klemmkraft wird mit einem Kraftsensor gemessen. Diese Klemmkraft nimmt mit steigendem Druck in der Rohrleitung zu, da sich die Rohrleitung radial ausdehnt.

Die EP 88 362 A1 offenbart eine nicht-invasive Druckmessung über eine Frequenzverschiebung von Schwingungsmoden der Rohrleitung. Die Rohrleitung wird mit einer variablen Anregungsfrequenz zu Schwingungen angeregt, und die Resonanzfrequenz wird bestimmt.

Nicht-invasive Druckmessungen sind weiterhin auch in der FR 2 215 615 A, in der WO 1998 037 395 A1, in der EP 1 948 924 B1, in der EP 210 523 A1, in der EP 49 501 B1, in der EP 720 006 A1, in der DE 10 2009 026 968 A1, in der EP 1 657 537 A1 sowie in der DE 10 2009 029 346 A1 offenbart.

Allen dort offenbarten Vorrichtungen und Verfahren ist gemein, dass diese mehr oder weniger empfindlich auf Druckänderungen reagieren, jedoch zur Überwachung von absoluten Drücken in industriellen Prozessen wegen der zu großen Messunsicherheiten nicht geeignet sind. Diese Unsicherheiten können mehrere 10% des gesamten Messbereichs betragen.

EP 0 210 523 A1 offenbart eine Einrichtung zum Messen des Drucks, der Normalkraft und der Biegung in einem Rohr. Diese Einrichtung umfasst erste Dehnungsmessstreifen, die am Rohr in axialer Richtung angeordnet sind, und zweite Dehnungsmessstreifen, die am Rohr in tangentialer Richtung angeordnet sind.

EP 0 088 362 A1 offenbart eine nichtinvasive Druckmessung an einem Rohr, bei der das Rohr elektromagnetisch zu einer Schwingung angeregt und diese Schwingung wiederum elektromagnetisch registriert wird.

DE 10 2009 026 692 A1 offenbart eine Vorrichtung zur Bestimmung und/oder Überwachung des Grenzfüllstands, der Dichte und/oder der Viskosität eines Mediums in einer Rohrleitung. Hierzu wird ein Messrohr verwendet, dessen Querschnitt von einer kreisrunden Form abweicht.

WO 2004/011 894 A1 offenbart ein Verfahren zur nicht-invasiven Druckmessung mit einem Messrohr mit unrundem Querschnitt, das entlang zweier Achsen des unrunden Querschnitts vibriert.

EP 2 629 074 A1 offenbart ein Verfahren zur Messung des Drucks in einem von mindestens einer Wand begrenzten Volumen durch Resonanzanregung dieser Wand über Flüssigkeit auf der anderen Seite der Wand.

WO 2014/197 760 A1 offenbart eine ringförmige Vorrichtung zur Druckmessung in einem Rohr, die um das Rohr herum geklemmt wird. Ein Ausdehnen oder Zusammenziehen des Rohrs wird auf diese Vorrichtung übertragen und gemessen.

### Aufgabe und Lösung

Es ist daher die Aufgabe der vorliegenden Erfindung, die Genauigkeit nicht-invasiver Druckmessungen von Fluiden in industriellen Anwendungen zu verbessern.

Diese Aufgabe wird erfindungsgemäß gelöst durch eine Vorrichtung gemäß Hauptanspruch. Weitere vorteilhafte Ausgestaltungen ergeben sich aus den darauf rückbezogenen Unteransprüchen.

### Offenbarung der Erfindung

Die Erfindung wird durch die Patentansprüche definiert. Ausgestaltungen und Ausführungsformen, die nicht unter die Ansprüche fallen, werden präsentiert, um die beanspruchte Erfindung zu illustrieren und ihr Verständnis zu erleichtern.

Im Rahmen der Erfindung wurde eine Vorrichtung zur Messung des Drucks p eines durch eine Rohrleitung strömenden Fluids entwickelt. Dieses Fluid kann eine Flüssigkeit, ein Gas oder ein Gemisch aus Flüssigkeits- und Gasphasen sein. Das Fluid kann auch einen Zwischenzustand zwischen dem flüssigen und dem gasförmigen Aggregatzustand haben.

Die Vorrichtung umfasst mindesten einen an einem Außenumfang der Rohrleitung angeordneten primären Sensor zur Messung einer vom Druck p abhängigen primären physikalischen Messgröße. Durch Verrechnung dieser primären physikalischen Messgröße mit mindestens einer Eichgröße ist der Absolutwert des Drucks p erhältlich. Dabei bezieht sich die Eichgröße auf die Geometrie und/oder auf mindestens eine Materialeigenschaft der Rohrleitung. Sowohl die Geometrie als auch die Materialeigenschaften können beeinflussen, inwieweit sich ein Druck p im Inneren der Rohrleitung in eine Änderung des am Außenumfang der Rohrleitung vom Sensor registrierten Signals fortpflanzt. Daher sind Mittel zur Ermittlung der Eichgröße sowie eine Auswerteeinheit, die aus der primären physikalischen Messgröße in Verbindung mit der Eichgröße den Druck p ermittelt, vorgesehen.

Erfindungsgemäß umfassen die Mittel zur Ermittlung der Eichgröße in einer ersten Ausgestaltung ein fluidisch mit der Rohrleitung verbindbares Messrohr, das sich im Material und/oder in der Querschnittsgeometrie vom Rest der Rohrleitung unterscheidet und für das die Eichgröße bekannt ist. Dabei ist der primäre Sensor an einem Außenumfang des Messrohrs angeordnet.

Es wurde erkannt, dass die fertigungsbedingte Streuung in der Geometrie und in den Materialeigenschaften von Rohrleitungen für den industriellen Gebrauch eine Hauptursache für die großen Messunsicherheiten bei nicht-invasiven Druckmessungen ist. Typischerweise werden derartige Rohrleitungen aus wirtschaftlichen Gründen mit so großen Fertigungstoleranzen spezifiziert, wie es für die jeweilige Anwendung verträglich ist; eine Fertigung mit engeren Toleranzen wäre zwar möglich, würde den Preis aber deutlich in die Höhe treiben. Speziell bei einer Nachrüstung einer nicht-invasiven Druckmessung wirft dies Probleme auf, da die Geometrie und die stoffliche Zusammensetzung der Rohrleitung am Ort der Messung nur ungenau bekannt sind. Das erfindungsgemäß vorgesehene Messrohr ist nun in seiner Geometrie und seinen Materialeigenschaften darauf optimiert, die Unsicherheiten bei der nicht-invasiven Druckmessung deutlich zu reduzieren. Es kann beispielsweise mit einer besonders engen Toleranz gefertigt sein, aus elementarem Metall anstelle einer Legierung mit möglicherweise schwankender Zusammensetzung gefertigt sein und/oder geometrische Symmetrien aufweisen, die dazu führen, dass sich ein großer Teil der Messunsicherheiten herausmittelt. Dementsprechend steckt in dem Messrohr pro Einheit Länge ein deutlich größerer Aufwand als in der eigentlichen Rohrleitung. Dafür muss das Messrohr im Höchstfall einige Meter lang sein, während die eigentliche Rohrleitung eine Länge von mehreren Kilometern haben kann. Der Druck p in der eigentlichen Rohrleitung und im Messrohr ist aufgrund der fluidischen Verbindung identisch; durch die Anordnung des primären Sensors am Außenumfang des Messrohrs wird die Druckmessung auf eine eigens hierfür vorgesehene Werkbank verlagert, auf der sie wesentlich genauer durchgeführt werden kann.

Alternativ oder auch in Kombination zu diesem Messrohr können die Mittel zur Ermittlung der Eichgröße in einer zweiten Ausgestaltung mindestens einen an einem Außenumfang der Rohrleitung oder des Messrohrs angeordneten Eichsensor umfassen, der physikalisch auf die Eichgröße sensitiv ist. Dabei kann auch beispielsweise ein und derselbe Sensor sowohl als primärer Sensor als auch, beispielsweise mit einer anderen Ansteuerung oder Auswertung, als Eichsensor arbeiten. Ein Eichsensor am Außenumfang der Rohrleitung bietet den Vorteil, dass anders als beim Einsetzen des Messrohrs kein Eingriff in den Kreislauf des Fluids mehr notwendig ist. Damit ist insbesondere die Nachrüstung einer bestehenden Industrieanlage mit einer nicht-invasiven Druckmessung besonders einfach. Der industrielle Prozess muss nicht unterbrochen werden. Weiterhin kann mit dem Eichsensor auch festgestellt werden, ob sich die Eigenschaften der Rohrleitung aufgrund von Alterung oder Verschleiß im Laufe der Zeit ändern. Gerade komplexe und teure Anlagen sind teilweise für Zeiträume von 50 Jahren und länger in Betrieb. In dieser Zeit kann durch das strömende Fluid beispielsweise die Wandstärke der Rohrleitung von innen heraus durch mechanisches Abtragen verdünnt werden, oder das Material der Rohrleitung kann durch chemischen Angriff des Fluids beispielsweise versprödet oder ausgelaugt werden.

In einer besonders vorteilhaften Ausgestaltung der Erfindung ist der primäre Sensor physikalisch auf eine mechanische Spannung, Dehnen, Verformung und/oder eine Änderung eines Durchmessers D der Rohrleitung oder des Messrohrs sensitiv. Änderungen dieser Eigenschaften hängen unmittelbar mit Kräften zusammen, die aufgrund des Drucks (Kraft pro Fläche) auf die Innenwandung der Rohrleitung bzw. des Messrohrs ausgeübt werden. Die Verrechnung des vom primären Sensor gelieferten Messwerts mit der Eichgröße zum Absolutwert des Drucks p ist dann besonders einfach.

In einer weiteren besonders vorteilhaften Ausgestaltung der Erfindung weisen der primäre Sensor und/oder der Eichsensor mindestens einen Sender zur Einkopplung von Schallwellen in die Rohrleitung und/oder in das Messrohr sowie mindestens einen Empfänger zur Messung der Antwort der Rohrleitung bzw. des Messrohrs auf diese Schallwellen auf. Dabei können durch die Schallwellen geradlinig durch die Rohrleitung bzw. durch das Messrohr einschließlich des darin befindlichen Fluids, entlang der Außenwandung der Rohrleitung bzw. des Messrohrs oder auf einer beliebigen Kombination aus beiden Wegen ausbreiten. Über die Frequenz der verwendeten Schallwellen kann selektiert werden, welche primäre physikalische Messgröße bzw. welche Eichgröße abgefragt wird. Insbesondere kann ein und derselbe Sensor durch Anregung mit mehreren Frequenzkomponenten gleichzeitig oder nacheinander zur Abfrage verschiedener Größen verwendet werden.

In einer besonders vorteilhaften Ausgestaltung der Erfindung ist der Sender frequenzvariabel, und/oder sein Emissionsspektrum ist zumindest innerhalb eines Frequenzintervalls kontinuierlich. Der Empfänger ist vorteilhaft frequenzsensitiv. Mit diesen Maßnahmen, einzeln oder in Kombination, kann insbesondere abgefragt werden, bei welcher Frequenz eine Resonanz in der Rohrleitung und/oder im Messrohr angeregt werden kann. Diese Resonanzfrequenz ist gegenüber Störeinflüssen deutlich unempfindlicher als eine Messung der Antwort bei nur einer Frequenz oder etwa die Messung einer Kraftwechselwirkung zwischen der Rohrleitung bzw. dem Messrohr einerseits und dem Sensor andererseits.

Insbesondere Änderungen der mechanischen Spannung, eines Durchmessers oder einer Resonanzfrequenz für eine Schwingungsmode der Rohrleitung bzw. des Messrohrs sind sehr eng mit dem Innendruck p korreliert. Diese Korrelation ist bis auf eine Genauigkeit von 1 % oder besser linear, und auch die Wiederholgenauigkeit liegt in der gleichen Größenordnung. Dies trifft auch dann noch zu, wenn die Rohrleitung bzw. das Messrohr oval ist oder wenn sich die Wandstärke oder andere Parameter lokal ändern. Wegen dieser Änderungen in Abhängigkeit der azimutalen Position entlang des Außenumfangs war bisher der Absolutwert des Drucks p nur ungenau bestimmbar. Insbesondere variierte er auf Grund der Fertigungstoleranzen von Rohrleitung zu Rohrleitung. Indem gemäß der Erfindung die Eichgröße auf verbessertem Wege ermittelt wird, kann der Einfluss dieser und anderer Fehlerquellen korrigiert und der Absolutwert des Drucks p genauer bestimmt werden.

In einer weiteren besonders vorteilhaften Ausgestaltung der Erfindung ist mindestens eine Klemmvorrichtung zur Befestigung des primären Sensors und/oder des Eichsensors am Außenumfang der Rohrleitung und/oder des Messrohrs vorgesehen. Die Klemmvorrichtung kann dann insbesondere den primären Sensor bzw. den Eichsensor mit einer solchen Klemmkraft FK an die Rohrleitung bzw. an das Messrohr anpressen, dass die durch diese Klemmkraft FK verursachte Haftreibung ein Verrutschen des Sensors aufgrund von Schwerkraft, Vibrationen oder Stößen zuverlässig verhindert. Dabei muss in die Integrität und damit insbesondere in die Dichtigkeit der Rohrleitung bzw. des Messrohrs nicht eingegriffen werden. Die Befestigung eignet sich somit auch für vorübergehende Aufbauten.

Vorteilhaft ist der primäre Sensor und/oder der Eichsensor physikalisch auf eine zwischen der Rohrleitung bzw. dem Messrohr einerseits und der Klemmvorrichtung andererseits wirkende Klemmkraft FK sensitiv. Wie zuvor erläutert, wird diese Klemmkraft FK unmittelbar durch den Druck p des Fluids im Inneren der Rohrleitung bzw. des Messrohrs beeinflusst.

Vorteilhaft erhält die Auswerteeinheit die Steifigkeit S der Klemmvorrichtung, die Klemmkraft FK und/oder mindestens eine mechanische Materialkonstante des primären Sensors und/oder des Eichsensors als Eingabe. Durch Berücksichtigung dieser Größen kann die Genauigkeit des von der Auswerteeinheit bestimmten Absolutwerts für den Druck p noch weiter gesteigert werden.

In einer weiteren besonders vorteilhaften Ausgestaltung der Erfindung ist der Eichsensor zur fortlaufenden Überwachung der Eichgröße während des Betriebs der Rohrleitung bzw. des Messrohrs ausgebildet. Diese Überwachung kann kontinuierlich, aber auch intermittierend in beliebigen Zeitabständen erfolgen. Damit kann zum Einen vermieden werden, dass verschleiß- oder alterungsbedingte Veränderungen der Rohrleitung bzw. des Messrohrs die Messgenauigkeit für den Druck p schleichend immer weiter verschlechtern. Derartige Veränderungen können an der Rohrleitung bzw. am Messrohr beispielsweise auftreten, wenn das Fluid chemisch besonders aggressiv ist, die Rohrleitung bzw. das Messrohr häufig extremen Temperaturen ausgesetzt ist und/oder häufige Druckpulsationen vom Fluid auf die Wandung der Rohrleitung bzw. des Messrohrs übertragen werden. Zum Anderen ist die Kenntnis von Veränderungen der Rohrleitung bzw. des Messrohrs auch für den industriellen Prozess selbst nützlich und kann beispielsweise eine notwendig werdende Wartung anzeigen.

Vorteilhaft umfasst die Eichgröße eine oder mehrere Größen aus der Gruppe E-Modul, Poisson-Zahl, Wandstärke und/oder Querschnittsgeometrie der Rohrleitung und/oder des Messrohrs, und/oder Verteilungen dieser Größen, und/oder sie umfasst eine Länge L der Rohrleitung bzw. des Messrohrs zwischen benachbarten Flanschverbindungen und/oder Durchbrüchen durch den Außenumfang der Rohrleitung bzw. des Messrohrs. Das E-Modul und die Poisson-Zahl sind die wichtigsten elastischen Kenngrößen, mit deren Hilfe berechnet werden kann, wie stark die Rohrleitung bzw. das Messrohr bei einem gegebenen Druck p deformiert wird. Die Stärke dieser Deformation wird auch durch die Wandstärke und/oder durch die Querschnittsgeometrie der Rohrleitung bzw. des Messrohrs mitbestimmt. Aufgrund der Fertigungstoleranzen können sich alle diese Größen entlang der Längsachse der Rohrleitung bzw. des Messrohrs, aber auch auf einem Weg entlang des Außenumfangs der Rohrleitung bzw. des Messrohrs, in statistischer Weise ändern. Die Länge zwischen benachbarten Flanschverbindungen und/oder Durchbrüchen durch den Außenumfang gibt die sogenannte ungestörte Länge der Rohrleitung bzw. des Messrohrs an. Entlang der ungestörten Länge kann die Rohrleitung bzw. das Messrohr als homogen angenommen werden, und ggf. vorhandene Symmetrien können ausgenutzt werden.

In einer weiteren besonders vorteilhaften Ausgestaltung der Erfindung erhält die Auswerteeinheit mindestens eine Fehlertoleranz der primären physikalischen Messgröße, und/oder der Eichgröße, als Eingabe. Dabei kann die Auswerteeinheit insbesondere zur Gewichtung mehrerer Eichgrößen mit ihren Fehlertoleranzen ausgebildet sein. Beispielsweise kann die Auswerteeinheit Toleranzen der Geometrie der Rohrleitung bzw. des Messrohrs, der Wandstärke der Rohrleitung bzw. des Messrohrs oder auch der Klemmkraft FK als Eingabe erhalten. Je mehr Informationen die Auswerteeinheit erhält, desto weiter können die Messunsicherheiten reduziert werden. Letztendlich kann für den absoluten Druck p eine Messgenauigkeit von wenigen Prozent, bevorzugt von 1% oder besser, erreicht werden. Zur Korrektur der Messunsicherheiten kann die Auswerteeinheit beispielsweise funktionale Zusammenhänge zwischen Eichgrößen und primären physikalischen Messgrößen heranziehen. Diese funktionalen Zusammenhänge können beispielsweise als analytische Formeln in der Auswerteeinheit hinterlegt sein. Sie können dort aber beispielsweise auch in einem Kennfeld hinterlegt sein. Auch kann die Auswerteeinheit beispielsweise ein neuronales Netzwerk enthalten, das die Zusammenhänge zwischen mehreren Eichgrößen und einer oder mehreren physikalischen Messgrößen selbsttätig erlernt.

Vorteilhaft weist die Rohrleitung und/oder das Messrohr einen runden Querschnitt auf. Bei ovalem Querschnitt der Rohrleitung und/oder des Messrohrs ist an dem Ort entlang des Außenumfangs, an dem der Durchmesser ein Minimum annimmt, die relative Änderung dieses Durchmessers bei einer Druckänderung des Fluids am größten. Ist also der primäre Sensor vorteilhaft mindestens teilweise an diesem Ort angeordnet, so kann die Auflösung der Druckmessung gesteigert werden.

Als Eichsensoren sind insbesondere Ultraschallsensoren und Arrays aus Ultraschallsensoren geeignet. Es können aber beispielsweise auch optische oder magnetische Eichsensoren verwendet werden. Die Eichsensoren können einmalig bei der Installation der Vorrichtung, aber auch zu jedem anderen Zeitpunkt im Betrieb verwendet werden. Die bekannte Eichgröße, bzw. der Satz bekannter Eichgrößen, eines Messrohrs können beispielsweise vom Hersteller des Messrohrs zusammen mit dem Messrohr geliefert werden. Diese Informationen können beispielsweise auf einer elektronischen Speichereinheit mit einem Interface hinterlegt sein, das mit der Auswerteeinheit verbindbar ist und die Informationen an die Auswerteeinheit übermitteln kann, oder sie können auf einem Datenträger enthalten sein, der der Auswerteeinheit zugeführt wird.

Das Messrohr kann über eine Flanschverbindung lösbar mit der Rohrleitung verbunden werden, aber auch, beispielsweise durch Schweißen, dauerhaft in diese integriert sein.

Der primäre Sensor kann beispielsweise ein Dehnungsmessstreifen sein. Dieser misst eine Ausdehnung der Rohrleitung bzw. des Messrohrs aufgrund des Innendrucks. Die Ausdehnung kann aber auch auf optischem Wege gemessen werden, beispielsweise durch Korrelation mehrerer Bilder unter Anwendung der DICT (digital image correlation technology) oder durch optische Dehnungsmessung. Eine Änderung des Außendurchmessers der Rohrleitung bzw. des Messrohrs kann beispielsweise über einen Abstandssensor, der beispielsweise kapazitiv arbeiten kann, oder durch Messung der Klemmkraft FK zwischen der Rohrleitung bzw. dem Messrohr und einer Klemmvorrichtung gemessen werden. Die Antwort der Rohrleitung bzw. des Messrohrs auf Schallwellen kann beispielsweise mit einem elektrodynamischen Sensor oder mit einem Beschleunigungssensor gemessen werden.

Sowohl der primäre Sensor als auch der Eichsensor können jeweils aus mehreren Einzelsensoren zusammengesetzt sein. Diese können insbesondere an verschiedenen azimutalen und/oder axialen Positionen entlang des Außenumfangs der Rohrleitung bzw. des Messrohrs angeordnet sein. Der Einfluss ortsabhängiger Schwankungen auf das Messergebnis kann dadurch weiter reduziert werden. Beispielsweise kann die Auswerteeinheit dazu ausgebildet sein, eine Median- oder Mittelwertbildung über die von mehreren Sensoren gelieferten Messwerte vorzunehmen oder aber Messwerte eines Sensors, die krass von den Messwerten aller anderen Sensoren abweichen, unterzugewichten.

Die Offenbarung dieser Anmeldung umfasst auch die folgenden Beispiele:
Beispiel 1: Vorrichtung zur Messung des Drucks p eines durch eine Rohrleitung strömenden Fluids, umfassend mindestens einen an einem Außenumfang der Rohrleitung angeordneten primären Sensor zur Messung einer vom Druck p abhängigen primären physikalischen Messgröße, wobei der Absolutwert des Drucks p durch Verrechnung dieser primären physikalischen Messgröße mit mindestens einer Eichgröße erhältlich ist und wobei diese Eichgröße sich auf die Geometrie und/oder auf mindestens eine Materialeigenschaft der Rohrleitung bezieht, ferner umfassend Mittel zur Ermittlung der Eichgröße sowie eine Auswerteeinheit zur Ermittlung des Drucks p aus der primären physikalischen Messgröße in Verbindung mit der Eichgröße, wobei die Mittel zur Ermittlung der Eichgröße
   - ein fluidisch mit der Rohrleitung verbindbares Messrohr, das sich im Material und/oder in der Querschnittsgeometrie vom Rest der Rohrleitung unterscheidet und für das die Eichgröße bekannt ist, wobei der primäre Sensor an einem Außenumfang des Messrohrs angeordnet ist, und/oder
   - mindestens einen an einem Außenumfang der Rohrleitung oder des Messrohrs angeordneten Eichsensor, der physikalisch auf die Eichgröße sensitiv ist, umfassen.
Beispiel 2: Vorrichtung nach Beispiel 1, wobei der primäre Sensor physikalisch auf eine mechanische Spannung, Dehnung, Verformung und/oder eine Änderung eines Durchmessers D der Rohrleitung oder des Messrohrs sensitiv ist.
Beispiel 3: Vorrichtung nach einem der Beispiele 1 bis 2, wobei der primäre Sensor, und/oder der Eichsensor, mindestens einen Sender zur Einkopplung von Schallwellen in die Rohrleitung und/oder in das Messrohr sowie mindestens einen Empfänger zur Messung der Antwort der Rohrleitung bzw. des Messrohrs auf die Schallwellen aufweist.
Beispiel 4: Vorrichtung nach Beispiel 3, wobei der Sender frequenzvariabel ist und/oder das Emissionsspektrum des Senders zumindest innerhalb eines Frequenzintervalls kontinuierlich ist.
Beispiel 5: Vorrichtung nach einem der Beispiele 3 bis 4, wobei der Empfänger frequenzsensitiv ist.
Beispiel 6: Vorrichtung nach einem der Beispiele 1 bis 5, wobei mindestens eine Klemmvorrichtung zur Befestigung des primären Sensors und/oder des Eichsensors am Außenumfang der Rohrleitung und/oder des Messrohrs vorgesehen ist.
Beispiel 7: Vorrichtung nach Beispiel 6, wobei der primäre Sensor und/oder der Eichsensor physikalisch auf eine zwischen der Rohrleitung bzw. dem Messrohr einerseits und der Klemmvorrichtung andererseits wirkende Klemmkraft FK sensitiv ist.
Beispiel 8: Vorrichtung nach einem der Beispiele 6 bis 7, wobei die Auswerteeinheit die Steifigkeit S der Klemmvorrichtung, die Klemmkraft FK und/oder mindestens eine mechanische Materialkonstante des primären Sensors und/oder des Eichsensors als Eingabe erhält.
Beispiel 9: Vorrichtung nach einem der Beispiele 1 bis 8, wobei der Eichsensor zur fortlaufenden Überwachung der Eichgröße während des Betriebes der Rohrleitung bzw. des Messrohrs ausgebildet ist.
Beispiel 10: Vorrichtung nach einem der Beispiele 1 bis 9, wobei die Eichgröße eine oder mehrere Größen aus der Gruppe E-Modul, Poisson-Zahl, Wandstärke und/oder Querschnittsgeometrie der Rohrleitung und/oder des Messrohrs, und/oder Verteilungen dieser Größen, und/oder eine Länge L der Rohrleitung und/oder des Messrohrs zwischen benachbarten Flanschverbindungen und/oder Durchbrüchen durch den Außenumfang der Rohrleitung bzw. des Messrohrs, umfasst.
Beispiel 11: Vorrichtung nach einem der Beispiele 1 bis 10, wobei die Auswerteeinheit mindestens eine Fehlertoleranz der primären physikalischen Messgröße, und/oder der Eichgröße, als Eingabe erhält.
Beispiel 12: Vorrichtung nach Beispiel 11, wobei die Auswerteeinheit zur Gewichtung mehrerer primärer physikalischer Messgrößen und/oder mehrerer Eichgrößen mit ihren Fehlertoleranzen ausgebildet ist.
Beispiel 13: Vorrichtung nach einem der Beispiele 1 bis 12, wobei die Rohrleitung und/oder das Messrohr einen ovalen Querschnitt aufweist.
Beispiel 14: Vorrichtung nach Beispiel 13, wobei der primäre Sensor mindestens teilweise an einem Ort entlang des Außenumfangs angeordnet ist, an dem der Durchmesser D der Rohrleitung bzw. des Messrohrs ein Minimum annimmt.

### Spezieller Beschreibungsteil

Nachfolgend wird der Gegenstand der Erfindung anhand von Figuren erläutert, ohne dass der Gegenstand der Erfindung hierdurch beschränkt wird. Es ist gezeigt:
- Figur 1: Ausführungsbeispiel der erfindungsgemäßen Vorrichtung mit in die Rohrleitung integriertem Messrohr.
- Figur 2: Ausführungsbeispiel der erfindungsgemäßen Vorrichtung mit Eichsensor.

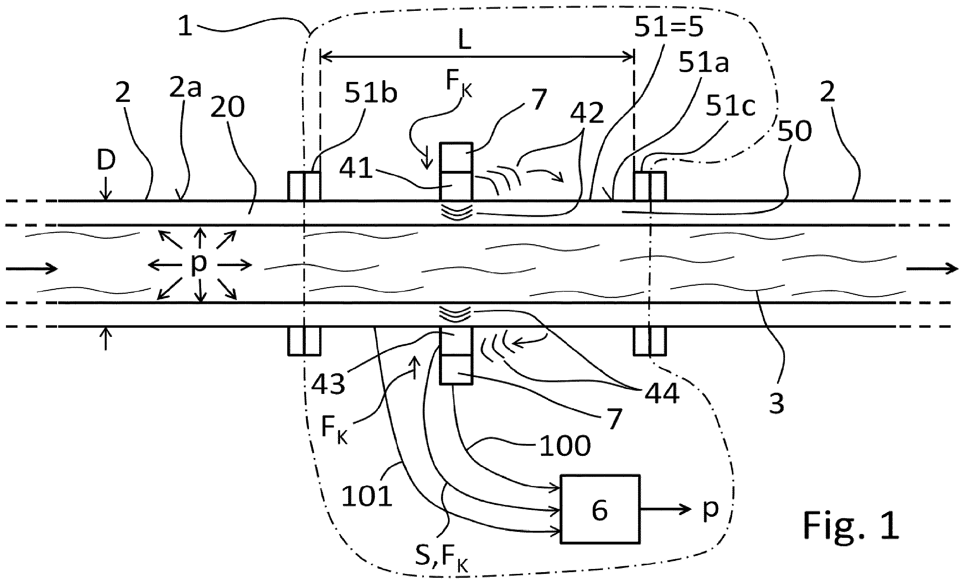

Figur 1 zeigt ein erstes Ausführungsbeispiel der erfindungsgemäßen Vorrichtung **1** zur Messung des Drucks **p** eines Fluids **3** in einer Rohrleitung **2.** Die Rohrleitung **2** hat eine Wandung **20** mit einem Außenumfang **2a** und einem Außendurchmesser **D.** Über Flansche **51**b und **51c** ist in die Rohrleitung **2** ein Messrohr **51** eingesetzt, das hier als Mittel **5** zur Ermittlung der Eichgröße **101** dient. Das Messrohr **51** hat eine Wandung **50** mit einem Außenumfang **51a,** wobei die Wandung **50** nominell die gleiche Wandstärke und den gleichen Außendurchmesser **D** aufweist wie die Wandung **20** der Rohrleitung **2.** Das Messrohr **51** ist jedoch mit wesentlich engeren geometrischen Fertigungstoleranzen hergestellt worden als die Rohrleitung **2,** und es besteht aus einer Legierung, welche den Prozessanforderungen entspricht und welche genau bekannte elastische Eigenschaften aufweist. Diese elastischen Eigenschaften bilden zusammen mit der genau bekannten Geometrie des Messrohrs **51** einen Satz Parameter, der als Eichgröße **101** dient.

Der primäre Sensor **4** umfasst in diesem Ausführungsbeispiel einen Sender **41** zur Einkopplung von Schallwellen **42** in das Messrohr **51** sowie einen Empfänger **43** zur Messung der Antwort **44** des Messrohrs **51** auf die Schallwellen **42.** Dabei breiten sich die Schallwellen sowohl gradlinig durch das Messrohr **51** und das darin enthaltene Fluid **3** als auch entlang des Außenumfangs **51a** des Messrohrs **51** aus.

Steigt der Druck **p** im Messrohr **51,** so verändern sich seine elastischen Eigenschaften. Insbesondere verändert sich seine Resonanzfrequenz, so wie sich durch mechanische Kraftausübung die Resonanzfrequenz einer Saite eines Musikinstruments ändert. Bei gleichbleibender Anregungsamplitude des Senders **41** wird die Amplitude des vom Empfänger **43** registrierten Signals maximal, wenn die Sendefrequenz der Resonanzfrequenz des Messrohrs **51** entspricht. Die frequenzabhängige Amplitude wird als primäre physikalische Messgröße **100** der Auswerteeinheit **6** zugeführt. Der primäre Sensor kann ebenso ein Dehnungssensor sein, der die Umfangsdehnung des Meßrohrs **51** als primäre physikalische Messgröße **100** der Auswerteeinheit **6** zuführt.

Der Sender **41** und der Empfänger **43** sind über eine Klemmvorrichtung **7** befestigt, die eine in Richtung des Außenumfangs **51a** des Messrohrs **51** gerichtete Klemmkraft **FK** ausübt. Die Steifigkeit **S** dieser Klemmvorrichtung **7** sowie die Klemmkraft **FK** ändern die Einkopplung von Schallwellen **42** auf dem Sender **41** bzw. die Auskopplung von Schallwellen **44** in den Empfänger **43.** Die Steifigkeit **S** und die Klemmkraft **FK** werden daher der Auswerteeinheit **6** als zusätzliche Eingaben zugeführt. Die Auswerteeinheit **6** ermittelt den Absolutwert des Drucks **p.**

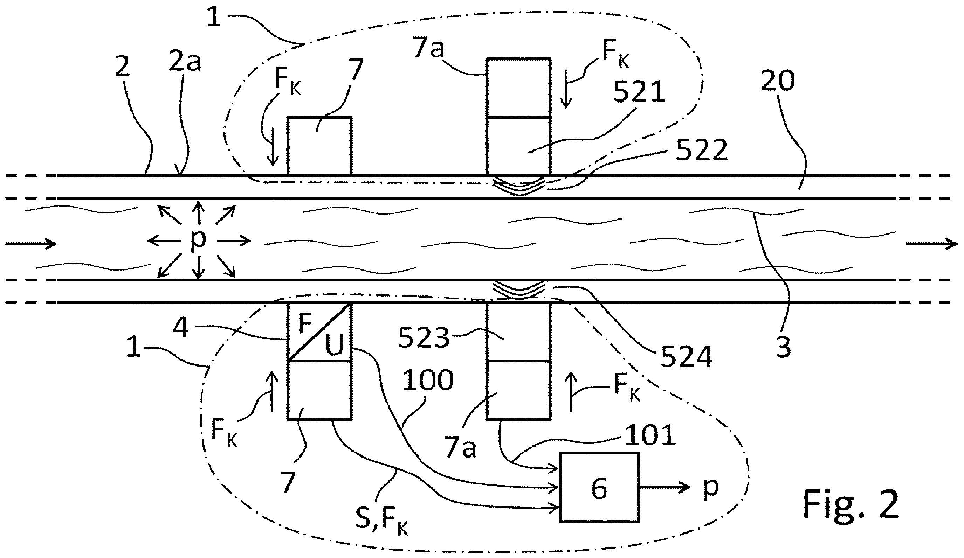

Figur 2 zeigt ein weiteres Ausführungsbeispiel der erfindungsgemäßen Vorrichtung. Im Unterschied zur Figur 1 ist die Rohrleitung **2** hier einstückig, und sie enthält kein Messrohr **51.** Der primäre Sensor **4** ist in diesem Ausführungsbeispiel ein Kraft- oder Dehnungssensor, der über eine erste Klemmvorrichtung **7** mit einer Klemmkraft **FK** an den Außenumfang **2a** der Rohrleitung **2** gedrückt wird. Der primäre Sensor **4** wandelt eine Kraft **F** oder eine Dehnung **ε** in eine Spannung **U** um, die der Auswerteeinheit **6** als primäre Messgröße **100** zugeführt wird.

Analog zur Figur 1 werden die Steifigkeit **S** und die Klemmkraft **FK** der Klemmvorrichtung **7** als zusätzliche Eingaben herangezogen, die der Auswerteeinheit **6** zugeführt werden.

Anstelle des Messrohrs **51** ist nun ein Eichsensor **52** vorgesehen, der aus einem Sender **521** und einem Empfänger **523** für Ultraschallwellen **522, 524** zusammengesetzt ist. Der Sender **521** koppelt die Ultraschallwellen **522** durch den Außenumfang **2a** in die Wandung **20** der Rohrleitung **2** ein. Die Antwort **524** darauf wird vom Empfänger **523** registriert. Der Anteil der Ultraschallwellen **522,** der sich nur innerhalb der Wandung **20** vom Sender **521** zum Empfänger **523** ausbreitet und das Fluid **3** nicht passiert, ist aus Gründen der Übersichtlichkeit nicht eingezeichnet. Die Laufzeiten der vom Empfänger **523** registrierten Signale sind die Eichgrößen **101,** die der Auswerteeinheit **6** zugeführt werden. Der Sender **521** und der Empfänger **523** sind über eine zweite Klemmvorrichtung **7a** mit einer Klemmkraft **FK** an den Außenumfang **2a** der Rohrleitung **2** angepresst.

### Bezugszeichenliste

- 1: Messvorrichtung
- 2: Rohrleitung
- 2a: Außenumfang der Rohrleitung 2
- 20: Wandung der Rohrleitung 2
- 3: Fluid
- 4: primärer Sensor
- 41: Sender für Schallwellen 42
- 42: Schallwellen
- 43: Empfänger für Antwort 44
- 44: Antwort des Messrohrs auf die Schallwellen 42
- 5: Mittel zur Ermittlung der Eichgröße 101
- 50: Wandung des Messrohrs 51
- 51: Messrohr
- 51a: Außenumfang des Messrohrs 51
- 51b, 51c: Flansche des Messrohrs 51
- 52: Eichsensor
- 521: Sender des Eichsensors 52 für Ultraschallwellen 522
- 522: Ultraschallwellen
- 523: Empfänger für Antwort 524
- 524: Antwort der Rohrleitung 2 auf die Ultraschallwellen 522
- 6: Auswerteeinheit
- 7, 7a: Klemmvorrichtung
- 100: primäre physikalische Messgröße
- 101: Eichgröße
- D: Durchmesser
- F: Kraft
- FK: Klemmkraft
- p: Druck
- S: Steifigkeit der Klemmvorrichtung 7, 7a
- U: Spannung

## Patentansprüche

1. Vorrichtung (1) zur Messung des Drucks p eines durch eine Rohrleitung (2, 51) strömenden Fluids (3), umfassend mindestens einen an einem Außenumfang (2a, 51a) der Rohrleitung (2, 51) angeordneten primären Sensor (4) zur Messung einer vom Druck p abhängigen primären physikalischen Messgröße (100), wobei der Absolutwert des Drucks p durch Verrechnung dieser primären physikalischen Messgröße (100) mit mindestens einer Eichgröße (101) erhältlich ist und wobei diese Eichgröße (101) sich auf die Geometrie und/oder auf mindestens eine Materialeigenschaft der Rohrleitung (2, 51) bezieht, ferner umfassend Mittel (5) zur Ermittlung der Eichgröße (101) sowie eine Auswerteeinheit (6) zur Ermittlung des Drucks p aus der primären physikalischen Messgröße (100) in Verbindung mit der Eichgröße (101),
**dadurch gekennzeichnet,**
**dass** die Mittel (5) zur Ermittlung der Eichgröße (101) ein fluidisch mit der Rohrleitung (2) verbindbares Messrohr (51) umfassen, das sich im Material und/oder in der Querschnittsgeometrie vom Rest der Rohrleitung (2) unterscheidet und für das die Eichgröße (101) bekannt ist, wobei der primäre Sensor (4) an einem Außenumfang (51a) des Messrohrs (51) angeordnet ist.

2. Vorrichtung (1) nach Anspruch 1,
**dadurch gekennzeichnet,**
**dass** die Mittel (5) zur Ermittlung der Eichgröße (101) zusätzlich mindestens einen an einem Außenumfang (51a) des Messrohrs (51) angeordneten Eichsensor (52) umfassen, der physikalisch auf die Eichgröße (101) sensitiv ist.

3. Vorrichtung (1) nach einem der Ansprüche 1 bis 2,
**dadurch gekennzeichnet,**
**dass** der primäre Sensor (4) physikalisch auf eine mechanische Spannung, Dehnung, Verformung und/oder eine Änderung eines Durchmessers D des Messrohrs (51) sensitiv ist.

4. Vorrichtung (1) nach einem der Ansprüche 1 bis 3,
**dadurch gekennzeichnet,**
**dass** der primäre Sensor (4), und/oder der Eichsensor (52), mindestens einen Sender (41, 521) zur Einkopplung von Schallwellen (42, 522) in die Rohrleitung (2) und/oder in das Messrohr (51) sowie mindestens einen Empfänger (43, 523) zur Messung der Antwort (44, 524) der Rohrleitung (2) bzw. des Messrohrs (51) auf die Schallwellen (42, 522) aufweist.

5. Vorrichtung (1) nach Anspruch 4,
**dadurch gekennzeichnet,**
**dass** der Sender (41, 521) frequenzvariabel ist und/oder dass das Emissionsspektrum des Senders (41, 521) zumindest innerhalb eines Frequenzintervalls kontinuierlich ist.

6. Vorrichtung (1) nach einem der Ansprüche 4 bis 5,
**dadurch gekennzeichnet,**
**dass** der Empfänger (43, 523) frequenzsensitiv ist.

7. Vorrichtung (1) nach einem der Ansprüche 1 bis 6,
**dadurch gekennzeichnet,**
**dass** mindestens eine Klemmvorrichtung (7, 7a) zur Befestigung des primären Sensors (4) und/oder des Eichsensors (52) am Außenumfang (51a) des Messrohrs (51) vorgesehen ist.

8. Vorrichtung (1) nach Anspruch 7,
**dadurch gekennzeichnet,**
**dass** der primäre Sensor (4) und/oder der Eichsensor (52) physikalisch auf eine zwischen dem Messrohr (51) einerseits und der Klemmvorrichtung (7, 7a) andererseits wirkende Klemmkraft FK sensitiv ist.

9. Vorrichtung (1) nach einem der Ansprüche 7 bis 8,
**dadurch gekennzeichnet,**
**dass** die Auswerteeinheit (6) die Steifigkeit S der Klemmvorrichtung (7, 7a), die Klemmkraft FK und/oder mindestens eine mechanische Materialkonstante des primären Sensors (4) und/oder des Eichsensors (52) als Eingabe erhält.

10. Vorrichtung (1) nach einem der Ansprüche 1 bis 9,
**dadurch gekennzeichnet,**
**dass** der Eichsensor (52) zur fortlaufenden Überwachung der Eichgröße (101) während des Betriebes des Messrohrs (51) ausgebildet ist.

11. Vorrichtung (1) nach einem der Ansprüche 1 bis 10,
**dadurch gekennzeichnet,**
**dass** die Eichgröße (101) eine oder mehrere Größen aus der Gruppe E-Modul, Poisson-Zahl, Wandstärke und/oder Querschnittsgeometrie des Messrohrs (51), und/oder Verteilungen dieser Größen, und/oder eine Länge L des Messrohrs (51) zwischen benachbarten Flanschverbindungen (51b, 51c) und/oder Durchbrüchen durch den Außenumfang (51a) des Messrohrs (51), umfasst.

12. Vorrichtung (1) nach einem der Ansprüche 1 bis 11,
**dadurch gekennzeichnet,**
**dass** die Auswerteeinheit (6) mindestens eine Fehlertoleranz (100a, 101a) der primären physikalischen Messgröße (100), und/oder der Eichgröße (101), als Eingabe erhält.

13. Vorrichtung (1) nach Anspruch 12,
**dadurch gekennzeichnet,**
**dass** die Auswerteeinheit (6) zur Gewichtung mehrerer primärer physikalischer Messgrößen (100) und/oder mehrerer Eichgrößen (101) mit ihren Fehlertoleranzen (100a, 101a) ausgebildet ist.

14. Vorrichtung (1) nach einem der Ansprüche 1 bis 13,
**dadurch gekennzeichnet,**
**dass** das Messrohr (51) einen ovalen Querschnitt aufweist.

15. Vorrichtung (1) nach Anspruch 14,
**dadurch gekennzeichnet,**
**dass** der primäre Sensor (4) mindestens teilweise an einem Ort entlang des Außenumfangs (51a) angeordnet ist, an dem der Durchmesser D des Messrohrs (51) ein Minimum annimmt.
